# EUROPEAN PATENT APPLICATION

(11) **EP 0 561 232 A1**
(43) Date of publication of application: **22.09.1993**
(21) Application number: 93103495.3
(22) Date of filing: 04.03.1993
(51) Int. Cl.: H04N 1/00

(54) **Paper-supplying device**

(30) Priority: 07.03.1992 JP 84741/92; 07.03.1992 JP 84742/92
(71) Applicant: MITA INDUSTRIAL CO., LTD., Osaka 540 (JP)
(72) Inventor: Ishii, Yoshifumi, c/o MITA INDUSTRIAL CO., LTD., Osaka 540 (JP)
(74) Representative: TER MEER - MÜLLER - STEINMEISTER & PARTNER

(57) **Abstract**

The paper-supplying device mainly comprises a pair of paper-supplying rollers (4,5) arranged in opposite up/down relation for putting a bundle of manuscripts (P) placed on a paper-supplying tray (3) therebetween and having an increased frictional circumferential surface portion (4a, 5a) by making the frictional force of one semicircular surface larger than that of the other semicircular surface, a pair of feed rollers (8,9) arranged on the downstream side of the paper-supplying rollers (4,5) with a distance shorter than a semicircular length of the paper-supplying rollers (4,5). Rotation-change over means (16,20) are provided so as to drive the axis of one of said pair of paper-supplying rollers (4,5) for changing over the rotational direction of the pair of paper-supplying rollers (4,5) from a regular to a reverse rotational direction. A pair of assistant rollers (6,7) is arranged above and below of a moving path of said bundle of manuscripts (P) placed on said paper-supplying tray (3) to be rotated in the same direction synchronously with the paper-supplying rollers (4,5) during transmission of an image or a copying process and capable of drawing out the manuscripts in the bundle of manuscripts to the side of said feed rollers (8,9) by means of said increased frictional circumferential surface portion (4a, 5a) of the other paper-supplying roller. Thus, the paper-supplying order of the manuscripts in the bundle can be changed over to a paper supply from the uppermost manuscript and paper supply from the lowermost manuscript in the bundle depending upon the case where the multifunctional machine is to be used, i.e. in a facsimile apparatus function or in a copying apparatus function. Accordingly, the images can be transmitted from the manuscripts beginning with the smallest page number during facsimile transmittance and the copied papers on the other hand can be piled in turn from the smallest page number on top image.

## Description

### BACKGROUND OF THE INVENTION

### Field of the Invention

The present invention relates to a paper-supplying device for automatically supplying manuscripts in a multifunctional machine having a facsimile function and a copying function.

### Prior Art

The conventional facsimile apparatus with a copying function added has been known. A paper-supplying device in such multifunctional facsimile apparatus has either an overfeed paper-supplying function supplying manuscripts in turn from an uppermost manuscript of a bundle of manuscripts set on a paper-supplying tray in layers or an underfeed paper-supplying function supplying said manuscripts in turn from a lowermost manuscript of said bundle of manuscripts set on said paper-supplying tray in layers. That is to say, in case of said paper-supplying device having said overfeed paper-supplying function, when it is used as the facsimile apparatus, if said manuscripts are set on the paper-supplying tray with turning image surfaces thereof upward so as to continue downward in turn from the manuscript having a smaller page number, the manuscripts are supplied in turn from said manuscript having said smaller page number and thus images of the manuscripts are transmitted to a facsimile apparatus in another office in that order.

In addition, in case of the paper-supplying device having said underfeed paper-supplying function, when it is used as the facsimile apparatus, if the manuscripts are set on the paper-supplying tray with turning said image surfaces thereof downward so as to continue upward in turn from the manuscript having the smaller page number, the manuscripts are supplied in turn from the manuscript having the smaller page number and thus said images of the manuscripts are transmitted to said facsimile apparatus in another terminal in that order.

However, usually, the manuscripts are treated so as to continue downward in turn from the manuscript having the smaller page number under the condition that the image surfaces are turned upward regardless of the case where the images of the manuscripts are transmitted by the use of the facsimile function and the case where the manuscripts are copied by the use of the copying function, so that, when the above described facsimile apparatus is used as the copying machine, the copied papers are discharged on a paper-discharging tray in turn from the copied paper having a smaller page number and piled in a bundle of copied papers so as to continue upward in turn from the copied paper having a smaller page number. As the result, a problem occurs in that the copied papers must be repiled in the opposite order.

Furthermore, one example of the similar paper-supplying device capable of being changed over to an overfeed paper-supplying mode supplying papers in turn from the uppermost paper of a bundle of papers placed on a paper-supplying tray and an underfeed paper-supplying mode supplying said papers in turn from the lowermost paper of said bundle of papers placed on said paper-supplying tray has been developed (refer to Japanese Utility Model Application Laid-Open No. Sho 62- 105951).

That is to say, in this paper-supplying device, a paper-supplying passage is branched into an upper paper-supplying passage and a lower paper-supplying passage, the paper-supplying tray being capable of being connected with said upper paper-supplying passage and said lower paper-supplying passage so as to be changed over, a reversibly rotatable access body of revolution being provided between the upper paper-supplying passage and the lower paper-supplying passage, and a pair of separating rollers being arranged on the downstream side of the upper and lower paper-supplying passages.

In the upper paper-supplying passage, said access body of revolution is pushed against an upper side of the bundle of papers to supply said papers in turn from said upper side of the bundle of papers by rotating the access body of revolution, while, in the lower paper-supplying passage, the access body of revolution is pushed against a lower side of the bundle of papers to supply the papers in turn from said lower side of the bundle of papers by rotating the access body of revolution. At this time, even though for example the papers are overlappedly supplied, the papers can be separated by means of a pair of separating rollers on the downstream side to be properly supplied one by one.

However, in the above described paper-supplying device, problems occur in that not only said paper-supplying passage must be branched into the upper paper-supplying passage and the lower paper-supplying passage but also the paper-supplying tray must be changed in position relative to the upper and lower paper-supplying passages and connected with the upper and lower paper-supplying passages so as to be changed over and thus it is complicated in construction.

In view of the above described conventional disadvantages, it is an object of the present invention to provide a paper-supplying device in a multifunctional machine having a facsimile function and a copying function capable of being changed over to an overfeed paper-supplying order and an underfeed paper-supplying order of a bundle of papers depending upon a case where said multifunctional machine is used as a facsimile apparatus and a case where the multifunctional machine is used as a copying machine.

### SUMMARY OF THE INVENTION

The present invention provides a paper-supplying device comprising a pair of paper-supplying rollers arranged oppositely up and down with putting a bundle of manuscripts placed on a paper-supplying tray therebetween and having an increased frictional circumferential surface portion formed so as to make a frictional force of a semicircular surface larger than that of the other semicircular surface, means for rotatably driving said paper-supplying rollers, a pair of feed rollers arranged on the downstream side of the paper-supplying rollers with a distance shorter than a semicircular length of the paper-supplying rollers for putting a manuscript sent in turn from the paper-supplying rollers therebetween to send said manuscript to a manuscript table, rotation-changing over means provided so as to drive one of said pair of paper-supplying rollers by rotating said means For rotatably driving the paper-supplying rollers for changing over a rotational direction of the pair of paper-supplying rollers to a regular rotational direction, in which the pair of paper-supplying rollers are rotated in the same direction as the means for rotatably driving the paper-supplying rollers, and a reverse rotational direction in which the pair of paper-supplying rollers are reversely rotated, rotational force-transmitting means for transmitting a rotational force by an axis of rotation of said one paper-supplying roller to an axis of rotation of the other paper-supplying roller, and a pair of assistant rollers arranged up and down with putting said bundle of manuscripts placed on said paper-supplying tray therebetween to be rotated in the same direction synchronously with the paper-supplying rollers during a transmission of image or a copying for acting one thereof on the side of one paper-supplying roller as a support member supporting the bundle of manuscripts, acting the other thereof on the side of the other paper-supplying roller as a pressing member pressing the bundle of manuscripts toward the side of the pair of paper-supplying rollers, and drawing out the manuscripts in the bundle of manuscripts to the side of said feed rollers by means of said increased frictional circumferential surface portion of the other paper-supplying roller.

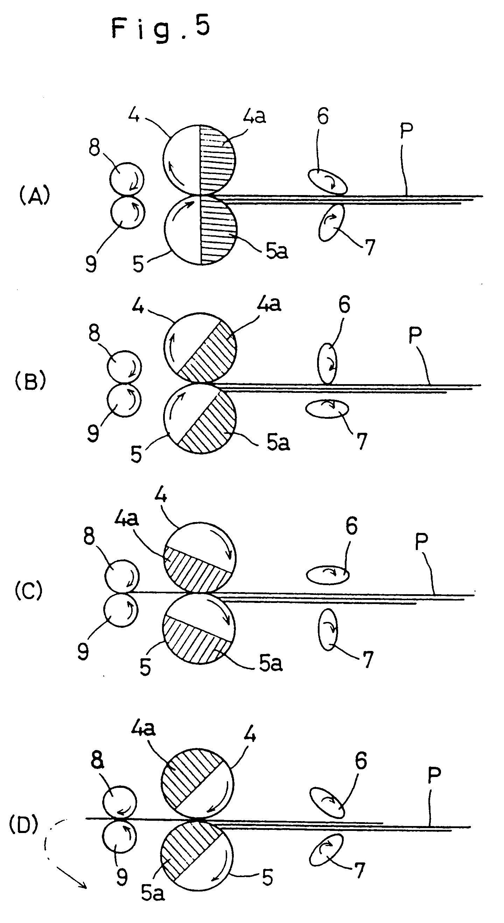

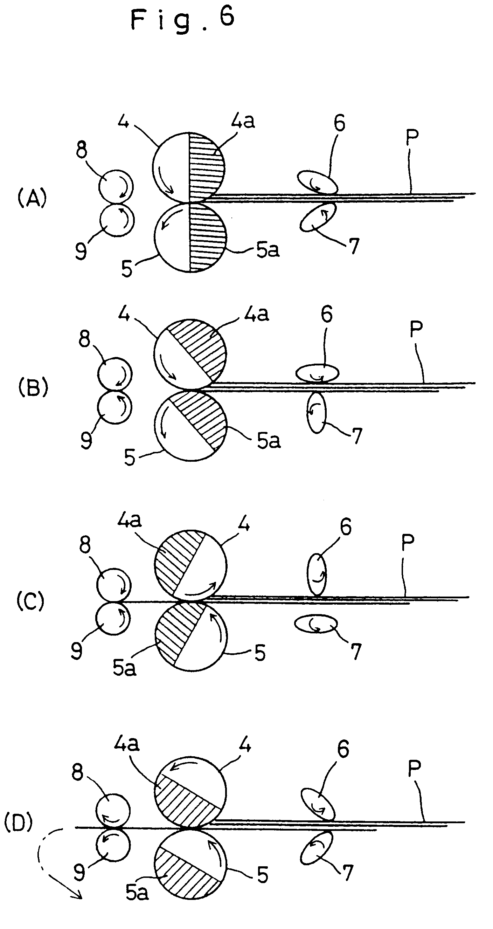

One paper-supplying roller according to the present invention means a lower paper-supplying roller 5 rotated in the same rotational direction (for example clockwise direction) as a stopping motor (the means for rotatably driving the paper-supplying rollers) 14, as shown in Fig. 5, when a use of the facsimile function was selected. On the other hand, one paper-supplying roller means an upper paper-supplying roller 4 rotated in the direction (counterclockwise direction) opposite to the rotational direction (for example clockwise direction) of said stepping motor (the means for rotatably driving the paper-supplying rollers) 14, as shown in Fig. 6, when a use of the copying function was selected.

That is to say, according to the above described construction of the present invention, provided that for example the overfeed paper-supplying function of the paper-supplying means is operated when said use of the facsimile function was selected by means of a selecting means, the manuscripts set on the paper-supplying tray in layers so as to continue downward in turn from the manuscript having a smaller page number are supplied in turn from the uppermost manuscript in the bundle of manuscripts, in short the manuscript having a smaller page number, to transmit images of the manuscripts to another office in that order.

On the other hand, when said use of the copying function was selected by means of said selecting means, the underfeed paper-supplying function of the paper-supplying means is operated. Accordingly, if the manuscripts are set on the paper-supplying tray so as to continue downward in turn from the manuscript having the smaller page number in the same manner as during the transmission by the facsimile function, the manuscripts are supplied in turn from the lowermost manuscript, in short the manuscript having a larger page number, and thus copied papers are piled on a paper-discharging tray in an order from said copied paper having a larger page number to the copied paper having a smaller page number. That is to say, the copied papers are piled on said paper-discharging tray so as to continue downward in turn from the copied paper having a smaller page number with turning image surfaces thereof upward.

Moreover, according to the present invention, when the pair of paper-supplying rollers are changed over to said regular rotational mode by means of the rotation-changing over means, the uppermost paper in the bundle of papers pushed toward the paper-supplying rollers by means of one assistant roller brought into contact with the upper side of the bundle of papers is sent toward the feed rollers on the downstream side by means of the semicircular surface having a larger frictional force of the upper paper-supplying roller and then put between the feed rollers on the downstream side at front ends thereof by a time when their feed by means of the semicircular surface having a larger frictional force of the paper-supplying rollers is finished followed by being supplied by means of the feed rollers. And, when the pair of paper-supplying rollers are changed over to said reverse rotational mode by means of the rotation-changing over means, the lowermost paper in the bundle of papers pushed toward the paper-supplying rollers by means of the other assistant roller brought into contact with the lower side of the bundle of papers is sent toward the feed rollers by means of the semicircular surface having a larger frictional force of the lower paper-supplying roller and handed to the feed rollers.

### BRIEF DESCRIPTION OF THE DRAWINGS

Fig. 1 is a perspective view showing a condition during a time when a facsimile function of a paper-supplying device as one preferred embodiment of the present invention is operated;
Fig. 2 is a perspective view showing a condition during a time when a copying function of said paper-supplying device is operated;
Fig. 3 is a partially fractured side view showing a facsimile apparatus in which the paper-supplying device is incorporated;
Fig. 4 is a partial plan view showing an operating portion of said facsimile apparatus;
Fig. 5 is an operation diagram during a time when said facsimile function of the paper-supplying device is operated; and
Fig. 6 is an operation diagram during a time when said copying function of the paper-supplying device is operated.

### DETAILED DESCRIPTION OF THE PREFERRED EMBODIMENTS

The preferred embodiments of the present invention will be below described with reference to the drawings.

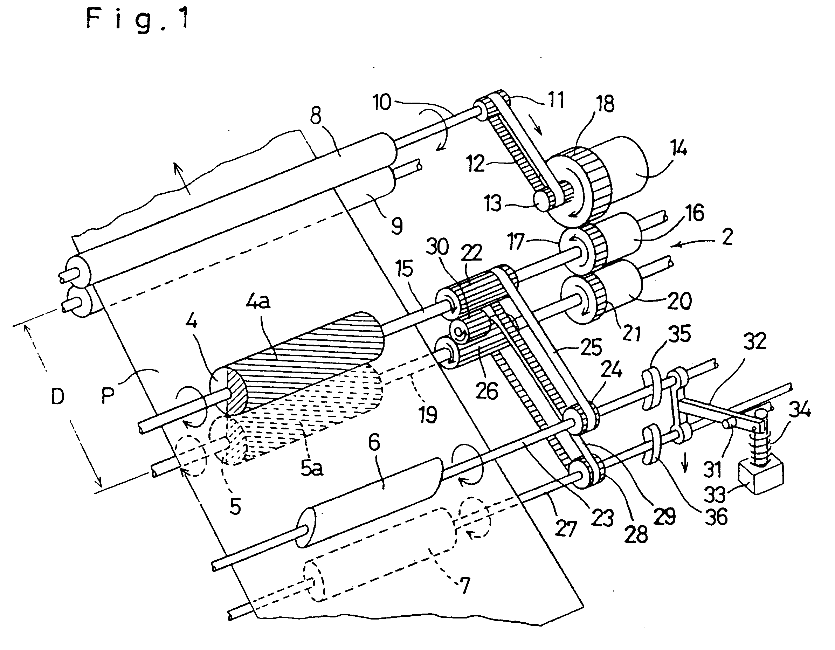

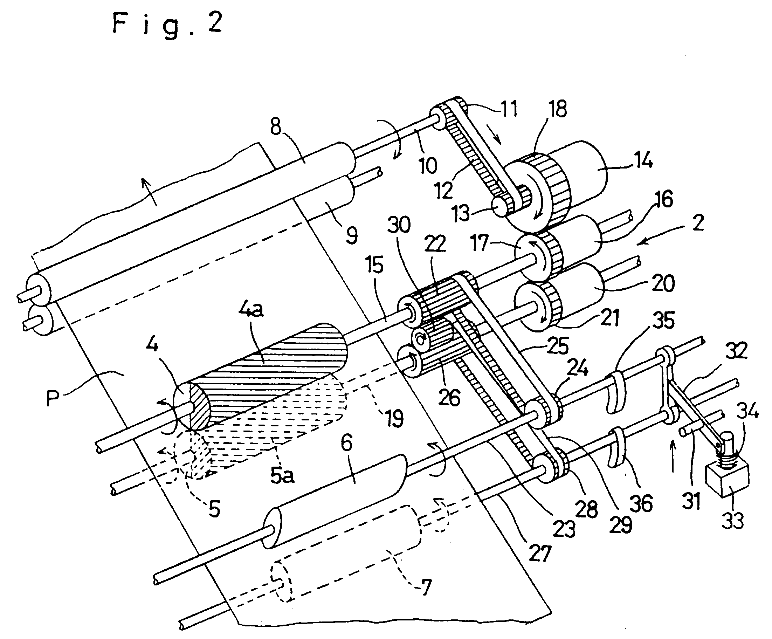

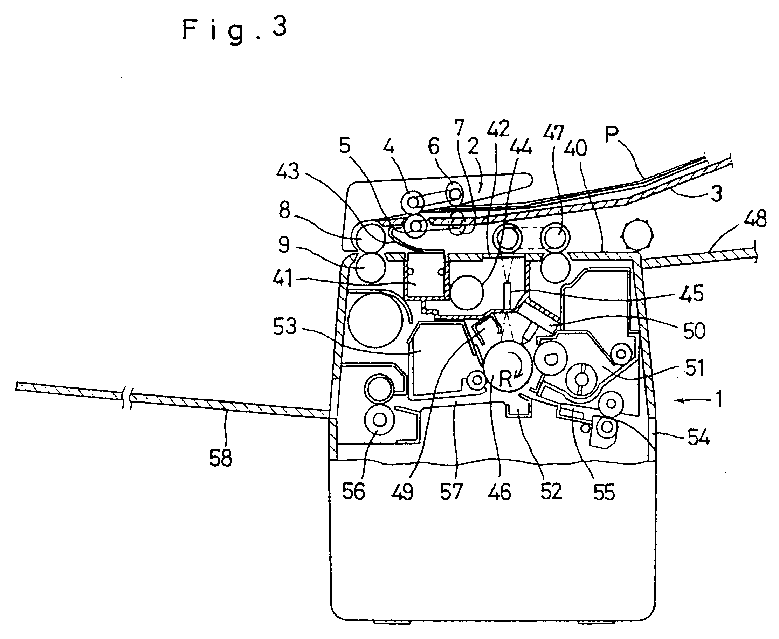

Figs. 1 and 2 are perspective views showing a construction of a paper-supplying device 2 according to the present invention and Fig. 3 is a partially fractured side view showing a facsimile apparatus 1 in which said paper-supplying device 2 is incorporated.

Said facsimile apparatus 1 shown in Fig. 3 is a complex machine having a copying function in addition to a facsimile function and the paper-supplying device 2 comprises a pair of paper-supplying rollers 4, 5 arranged oppositely up and down with putting a bundle of manuscripts placed on a paper-supplying tray 3 therebetween and having an increased frictional circumferential surface portion formed so as to make a frictional force of a semicircular surface larger than that of the other semicircular surface, a stepping motor (rotatably driving means) 14 for rotatably driving said paper-supplying rollers, a pair of feed rollers 8, 9 arranged on the downstream side of the paper-supplying rollers with a distance shorter than a semicircular length of the paper-supplying rollers for putting a manuscript sent in turn from the paper-supplying rollers therebetween to send said manuscript to a manuscript table, clutches (rotation-changing over means) 16, 20 provided so as to drive an axis of rotation of one of said pair of paper-supplying rollers by rotating said stepping motor 14 for changing over a rotational direction of the pair of paper-supplying rollers to a regular rotational direction, in which the pair of paper-supplying rollers are rotated in the same direction as the stepping motor 14, and a reverse rotational direction in which the pair of paper-supplying rollers are reversely rotated, gears 22, 26 and an intermediate gear 30 as rotational force-transmitting means for transmitting a rotational force by an axis of rotation of said one paper-supplying roller to an axis of rotation of the other paper-supplying roller, and a pair of assistant rollers 6, 7 arranged up and down with putting said bundle of manuscripts placed on said paper-supplying tray 3 therebetween to be rotated in the same direction synchronously with the paper-supplying rollers during a transmission of image or a copying for acting one thereof on the side of one paper-supplying roller as a support member supporting the bundle of manuscripts, acting the other thereof on the side of the other paper-supplying roller as a pressing member pressing the bundle of manuscripts toward the side of the pair of paper-supplying rollers, and drawing out the manuscripts in the bundle of manuscripts to the side of said feed rollers by means of said increased frictional circumferential surface portion of the other paper-supplying roller.

A contacting image sensor 41, a glass plate 42 and the like are arranged on a manuscript table 40 to which a manuscript P is supplied by means of the paper-supplying device 2. Said contacting image sensor 41 is a device for reading out an image of said manuscript P pushed by means of a polyester film 43 and when said image of the manuscript P is transmitted, image data read out by means of the contacting image sensor 41 are converted to digital signals to be transmitted. Said glass plate 42 applies a light from a light source 44 composing an exposing device to an image surface of the manuscript P supplied and the resulting optical image is exposed on a surface of a photoreceptor 46 arranged below said manuscript table 40 by means of a self-focusing lens 45. The manuscript P sent onto the glass plate 42 is discharged on a manuscript-receiving table 48 through discharging rollers 47.

A charger 49, a LED print head 50, a developing device 51, a transfer-separating device 52 and a cleaning device 53 are arranged in a rotational direction of said photoreceptor 46 in the order described around the photoreceptor 46 in addition to said exposing device. Said LED print head 50 is a device for converting said image data received by a facsimile function to optical signals to expose the resulting optical signals on said surface of the photoreceptor 46.

In addition, a paper-supplying passage 55 and a paper-discharging passage 57 is arranged ranging from a paper-supplying port 54 to said transfer-separating device 52 and from the transfer-separating device 52 to a fixing device 56, respectively. Copied papers discharged through said fixing device 56 are discharged on a paper-discharging tray 58.

In the paper-supplying device 2 shown in Fig. 1, the respective semicircular portions (shaded portions) of an outer circumferential surface of a pair of the paper-supplying rollers 4, 5 are said increased frictional circumferential surface portions 4a, 5a having a frictional force larger than that of the other semicircular portions. Furthermore, lengths of said semicircular portions of said outer circumferential surface of the paper-supplying rollers 4, 5 are set so as to be larger than a length D from the paper-supplying rollers 4, 5 to said feed rollers 8, 9.

A rotation of an axis of rotation 10 of the upper feed roller 8 is transmitted to the feed roller 8 through gears 18, 13, a belt 12 and a gear 11 by means of the stepping motor 14.
The lower feed roller 9 is pressed against the upper feed roller 8 to be trailed. A rotation of an axis of rotation 15 of the upper paper-supplying roller 4 is transmitted to a gear 17 by means of the stepping motor 14 so as to be changed over by means of said clutch 16 through said gear 18.

In addition, a rotation of an axis of rotation 19 of the lower paper-supplying roller 5 is transmitted to a gear 21 so as to be changed over through said clutch 20. Said gear 21 is engaged with said gear 17.

The axis of rotation 15 of the upper paper-supplying roller 4 is provided with said gear 22 and the gear 22 is connected with a gear 24 provided on an axis of rotation 23 of said assistant roller 6 through a belt 25. In addition, the axis of rotation 19 of the lower paper-supplying roller 5 is provided with said gear 26 and the gear 26 is connected with a gear 28 provided on an axis of rotation 27 of said assistant roller 7 through a belt 29. Said intermediate gear 30 is engaged with the gear 22 and the gear 26.

The assistant rollers 6, 7 have an elliptical sectional shape and the upper assistant roller 6 and the lower assistant roller 7 are set under the condition that long axes thereof are shifted by 90° in turning angle. Said axes of rotation 23, 27 of the assistant rollers 6, 7 are supported by means of a supporting arm 32 swingable up and down with a supporting axis 31 as as a fulcrum so as to be movable up and down. Said supporting arm 32 is connected with a solenoid 33 at a rear end thereof to swing the supporting arm 32 up and down by driving said solenoid 33. In addition, the supporting arm 32 is urged so that it may be positioned below by means of a spring 34 (refer to Fig. 1) to be turned upward against a force of said spring 34 and push up the upper assistant roller 6 and the lower assistant roller 7 when the solenoid 33 was driven (refer to Fig. 2) and then move the assistant rollers 6, 7 downward when the solenoid 33 was canceled from driving. The axis of rotation 23, 27 of the assistant roller 6, 7 is inserted in a semicircular guide sleeve 35, 36, respectively, to be guided up and down.

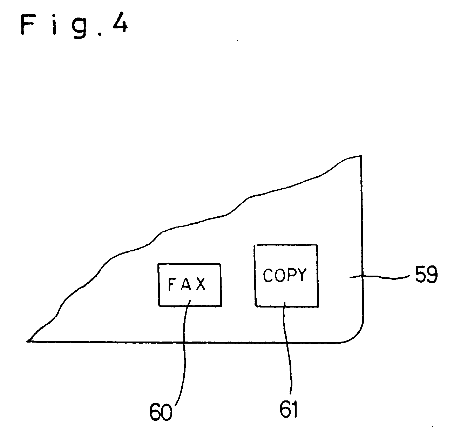

An operating portion 59 of the facsimile apparatus 1 is provided with a facsimile button 60 for inputting an operation-starting instruction of the fucsimile function and a copying button 61 for inputting an operation-starting instruction of the copying function, as shown in Fig. 4. Upon giving said operation-starting instruction of the facsimile function by means of said facsimile button 60, the clutch 16 is switched off and the clutch 20 is switched on in the paper-supplying device 2 (Fig. 1). In addition, upon giving said operation-starting instruction of the copying function by means of said copying button 61, the clutch 16 is switched on and the clutch 20 is switched off (Fig. 2).

An operation of the paper-supplying device 2 will be below described with reference to Fig. 5 and 6, respectively, for the case where the facsimile junction of the facsimile apparatus 1 is used and the case where the copying function of the facsimile apparatus 1 is used, respectively.

### (1) The case where the facsimile function of the facsimile apparatus is used:

In order to transmit the image of the manuscript P to a facsimile apparatus in another terminal by the facsimile function, the bundle of manuscripts P piled in the usual order so as to continue downward from the manuscript having the younger page number is set on the paper-supplying tray 3 (Fig. 3) with turning the image surface of the manuscripts upward.

Under the reset condition, the upper and lower paper-supplying rollers 4, 5 are set under the condition that the increased frictional circumferential surface portions 4a, 5a turn toward the assistant rollers 6, 7, as shown in Fig. 5 (A).

Upon inputting the operation-starting instruction of the facsimile function by pushing the facsimile button 60, the clutch 16 is switched off and the clutch 20 is switched on. Thus, the rotation of the stepping motor 14 is transmitted to the lower paper-supplying roller 5 through the gears 18, 17 and 21, the clutch 20 and the axis of rotation 19. In addition, the rotation of the lower paper-supplying roller 5 is transmitted to the upper paper-supplying roller 4 through the gear 26, the intermediate gear 30, the gear 22 and the axis of rotation 15. As the result, the upper and lower paper-supplying rollers 4, 5 are rotatably driven clockwise.

Furthermore, the rotation of the stepping motor 14 is transmitted to the feed rollers 8, 9 through the gear 13, the belt 12, the gear 11 and the axis of rotation 10. Thus, the upper feed roller 8 is rotatably driven clockwise and the lower feed roller 9 brought into contact with the upper feed roller 8 is rotatably driven counterclockwise. That is to say, the feed rollers 8, 9 are rotatably driven so that the manuscripts P sent from the paper-supplying rollers 4, 5 may be fed to the manuscript table 40.

Besides, the rotation of the upper paper-supplying roller 4 is transmitted to the upper assistant roller 6 through the gear 22, the belt 25, the gear 24 and the axis of rotation 23 and the rotation of the lower paper-supplying roller 5 is transmitted to the lower assistant roller 7 through the gear 26, the belt 29, the gear 28 and the axis of rotation 27. Thus, the upper and lower assistant rollers 6, 7 are rotatably driven in the same direction as the upper and lower paper-supplying rollers 4, 5. At this time, the solenoid 33 is not driven. Accordingly, the supporting arm 32 is turned downward by said force of the spring 34 and the upper and lower assistant rollers 6, 7 are pushed downward, as shown in Fig. 1. That is to say, at this time, the upper assistant roller 6 approaches to the upper surface of the bundle of manuscripts P while the lower assistant roller 7 is slightly separated from the lower surface of the bundle of manuscripts P [refer to Fig. 5(B)].

Under this condition, upon rotating the paper-supplying rollers 4, 5 and the assistant rollers 6, 7, the uppermost manuscript P is fed to the feed rollers 8, 9 from the bundle of manuscripts P by the operations shown in Fig. 5(B) and Fig. 5(C). That is to say, since the upper and lower assistant rollers 6, 7 are set in turning phase so that the long axes thereof may form an angle of 90° therebetween, the upper surface of the bundle of manuscripts P is pushed toward the paper-supplying rollers 4, 5 by a side circumferential surface on the side of long axis of the upper assistant roller 6, and at this time, the lower assistant roller 7 takes an almost transverse posture to function as a member for receiving the bundle of manuscripts P. As the result, the uppermost manuscript P in the bundle of manuscripts P is drawn out toward the feed rollers 8, 9 by means of the increased frictional circumferential surface portion 4a of the upper paper-supplying roller 4.

Since the circumferential length of the increased frictional circumferential surface portion 4a of the paper-supplying roller 4 is longer than said distance D from the paper-supplying rollers 4, 5 to the feed rollers 8, 9, the front ends of the manuscript P drawn out is put between the feed rollers 8, 9 to supply the manuscript P drawn out to the manuscript table 40 of the facsimile apparatus 1, as shown in Fig. 5 (D) during the drawing-out operation by the increased frictional circumferential surface portion 4a.

Thus, the manuscripts P set on the paper-supplying tray 3 are supplied to the manuscript table 40 in turn from the uppermost manuscript, that is the manuscript having the smallest page number. The image of the manuscript P supplied to the manuscript table 40 is read out by means of the contacting image sensor 41 and the read-out image datum is converted to the digital signal to be transmitted to the facsimile apparatus in another terminal. The manuscript P, of which image has been read out, is sent to said manuscript-receiving table 48 by means of said discharging rollers 47 to be discharged. As the result, the image of the manuscript P is transmitted in turn from the manuscript having the smallest page number.

### (2) The case where the copying function is used:

Also in order to copy the image of the manuscript P by the copying function, the bundle of manuscripts P piled in the usual order so as to continue downward from the manuscript having the smallest page number is set on the paper-supplying tray 3 (Fig. 3) with turning the image surface of the manuscripts upward in the same manner as that described in the case where the facsimile function was used.

Under the reset condition, the upper and lower paper-supplying rollers 4, 5 are set under the condition that the increased frictional circumferential surface portions 4a, 5a turn toward the assistant rollers 6, 7, as shown in Fig. 6(A), in the same manner as that described in the case where the facsimile function was used.

Upon inputting the operation-starting instruction of the copying function by pushing the copying button 61, the clutch 16 is switched on and the clutch 20 is switched on. Thus, the rotation of the stepping motor 14 is transmitted to the upper paper-supplying roller 4 through the gears 18 and 17, the clutch 16 and the axis of rotation 15. In addition, the rotation of the upper paper-supplying roller 4 is transmitted to the lower paper-supplying roller 5 through the gear 22, the intermediate gear 30, the gear 26 and the axis of rotation 19. As the result, the upper and lower paper-supplying rollers 4, 5 are rotatably driven counterclockwise.

The rotation of the stepping motor 14 is transmitted to the feed rollers 8, 9 through the gear 13, the belt 12, the gear 11 and the axis of rotation 10 in the same manner as that described in the case where the facsimile function was used.

Besides, the rotation of the upper paper-supplying roller 4 is transmitted to the upper assistant roller 6 through the gear 22, the belt 25, the gear 24 and the axis of rotation 23 and the rotation of the lower paper-supplying roller 5 is transmitted to the lower assistant roller 7 through the gear 26, the belt 29, the gear 28 and the axis of rotation 27. Thus, the upper and lower assistant rollers 6, 7 are rotatably driven in the same direction as the upper and lower paper-supplying rollers 4, 5. At this time, the solenoid 33 is driven and the supporting arm 32 is turned upward against the force of the spring 34 and thus the upper and lower assistant rollers 6, 7 are pushed upward, as shown in Fig. 2. That is to say, at this time, the lower assistant roller 7 approaches to the lower surface of the bundle of manuscripts P while the upper assistant roller 6 is slightly separated from the upper surface of the bundle of manuscripts P.

Under this condition, upon rotating the paper-supplying rollers 4, 5 and the assistant rollers 6, 7, the lowermost manuscript P is fed to the feed rollers 8, 9 from the bundle of manuscripts P by the operations shown in Fig. 6(B) and Fig. 6(C). That is to say, since the upper and lower assistant rollers 6, 7 are set in turning phase so that the long axes thereof may form an angle of 90° therebetween, the lower surface of the bundle of manuscripts P is pushed toward the paper-supplying rollers 4, 5 by said side circumferential surface on the side of long axis of the lower assistant roller 7, and at this time, the upper assistant roller 6 takes an almost transverse posture to function as a member for receiving the bundle of manuscripts P. As the result, the lowermost manuscript P in the bundle of manuscripts P is drawn out toward the feed rollers 8, 9 by means of the increased frictional circumferential surface portion 5a of the lower paper-supplying roller 5.

Since the circumferential length of the increased frictional circumferential surface portion 5a of the paper-supplying roller 5 is longer than the distance D from the paper-supplying rollers 4, 5 to the feed rollers 8, 9, the front ends of the manuscript P drawn out is put between the feed rollers 8, 9 to supply the manuscript P drawn out to the manuscript table 40 of the facsimile apparatus 1, as shown in Fig. 6(D) during the drawing-out operation by the increased frictional circumferential surface portion 5a.

Thus, the manuscripts P set on the paper-supplying tray 3 are supplied to the manuscript table 40 in turn from the lowermost manuscript, that is the manuscript having the largest page number. The image of the manuscript P supplied to the manuscript table 40 is applied with a light from said light source 44 of the exposing device on the glass plate 42 to expose the resulting optical image on a surface of said photoreceptor 46 by means of said selffocusing lens 45. The exposed image is developed by means of said developing device 51 and transferred to the copying paper supplied through said paper-supplying passage 55 from said paper-supplying port 54 by means of the transfer-separating device 52. The transferred copying paper is separated from the photoreceptor 46 to be sent to said fixing device 56 through said paper-discharging passage 57 and the fixed copying paper is discharged to said paper-discharging tray 58. The exposed manuscript P is sent to said manuscript-receiving table 48 by means of said discharging rollers 47 to be discharged. As the result, the copied papers are piled on the paper-discharging tray 58 in turn from one having the larger page number. That is to say, the copied papers are piled on the paper-discharging tray 58 with image surfaces thereof turning upward in turn so as to continue downward from one having the smallest page number.

In addition, although the case where the manuscripts P are piled on the paper-supplying tray 3 with image surfaces thereof turning upward in turn so as to continue downward from the manuscript having the smallest page number to be supplied was described in the above described preferred embodiment, the present invention can be applied also to the case where the manuscripts P are piled on the paper-supplying tray 3 with image surfaces thereof turning downward in turn so as to continue upward from the manuscript having the smallest page number to be supplied. In this case, the copied papers can be piled on the paper-discharging tray 58 in turn so as to continue downward from the copied paper having the smallest page number during the copying by supplying the manuscripts in turn from the lowermost manuscript in the bundle of manuscripts during the transmittance of image and supplying the manuscripts in turn from the uppermost manuscript in the bundle of manuscripts during the copying.

The present invention has the above described construction and the paper-supplying device in the multifunctional machine having the facsimile function and the copying function is provided with the paper-supplying means having the overfeed paper-supplying function supplying the manuscripts in turn from the uppermost manuscript in the bundle of manuscripts set on the paper-supplying tray in layers and the underfeed paper-supplying function supplying the manuscripts in turn from the lowermost manuscript in the bundle of manuscripts set on the paper-supplying tray in layers and the changing-over means for changing over the paper-supplying means to the overfeed paper-supplying function and the underfeed paper-supplying function depending upon the uses of the facsimile function and the copying function, so that the paper-supplying order of the manuscripts in the bundle of manuscripts can be changed over to the paper supply from the uppermost manuscript in the bundle of manuscripts and the paper supply from the lowermost manuscript in the bundle of manuscripts depending upon the case where the multifunctional machine is used as the facsimile apparatus and the case where the multifunctional machine is used as the copying apparatus. Accordingly, the images can be transmitted in turn from the manuscript having the smallest page number during the transmittance of manuscript image and the copying papers can be piled in turn from one having the smallest page number during the copying of manuscript image. Moreover, the present invention has the above described construction and a pair of paper-supplying rollers arranged oppositely to each other at positions where the bundle of papers placed on the paper-supplying tray is pressed at front ends thereof and having the increased frictional circumferential surface portion formed so as to make the frictional force of one semicircular surface larger than that of the other semicircular surface, a pair of feed rollers arranged at a position with the distance shorter than the semicircular length of the paper-supplying rollers from the paper-supplying rollers for putting the manuscript sent from the paper-supplying rollers therebetween to send the manuscript arid the rotation-changing over means changing over the rotational direction of the paper-supplying rollers to the regular rotational direction and the reverse rotational direction are provided, so that the paper-supplying order of the papers in the bundle of papers can be changed over to the paper supply from the uppermost paper and the paper supply from the lowermost paper by the simple construction.

## Claims

1. A paper-supplying device comprising a pair of paper-supplying rollers arranged oppositely up and down with putting a bundle of manuscripts placed on a paper-supplying tray therebetween and having an increased frictional circumferential surface portion formed so as to make a frictional force of one semicircular surface larger than that of the other semicircular surface, means for rotatably driving said paper-supplying rollers, a pair of feed rollers arranged on the downstream side of the paper-supplying rollers with a distance shorter than a semicircular length of the paper-supplying rollers for putting a manuscript sent in turn from the paper-supplying rollers therebetween to send said manuscript to a manuscript table, rotation-changing over means provided so as to drive one of said pair of paper-supplying rollers by rotating said means for rotatably driving the paper-supplying rollers for changing over a rotational direction of the pair of paper-supplying rollers to a regular rotational direction, in which the pair of paper-supplying rollers are rotated in the same direction as the means for rotatably driving the paper-supplying rollers, and a reverse rotational direction in which the pair of paper-supplying rollers are reversely rotated, rotational force-transmitting means for transmitting a rotational force by an axis of rotation of said one paper-supplying roller to an axis of rotation of the other paper-supplying roller, and a pair of assistant rollers arranged up and down with putting said bundle of manuscripts placed on said paper-supplying tray therebetween to be rotated in the same direction synchronously with the paper-supplying rollers during a transmission of image or a copying for acting one thereof on the side of one paper-supplying roller as a support member supporting the bundle of manuscripts, acting the other thereof on the side of the other paper-supplying roller as a pressing member pressing the bundle of manuscripts toward the side of the pair of paper-supplying rollers, and drawing out the manuscripts in the bundle of manuscripts to the side of said feed rollers by means of said increased frictional circumferential surface portion of the other paper-supplying roller.

2. A paper-supplying device as set forth in Claim 1 used in a multifunctional machine having a facsimile function and a copying function.

3. A paper-supplying device as set forth in Claim 1, wherein the pair of paper-supplying rollers, the pair of feed rollers and said pair of assistant rollers have an overfeed paper-supplying function supplying the manuscripts in the bundle of manuscripts set on the paper-supplying tray in layers in turn from the uppermost manuscript and a underfeed paper-supplying function supplying the manuscripts in the bundle of manuscripts set on the paper-supplying tray in layers in turn from the lowermost manuscript, respectively.

4. A paper-supplying device as set forth in Claim 1, where in said rotation-changing over means consists of a pair of clutches changing over the pair of paper-supplying rollers, the pair of feed rollers and the assistant rollers to said overfeed paper-supplying function supplying the manuscripts in the bundle of manuscripts in turn from the uppermost manuscript and said underfeed paper-supplying function supplying the manuscripts in the bundle of manuscripts in turn from the lowermost manuscript depending upon uses of said facimile function and said copying function.

5. A paper-supplying device as set forth in Claim 1, wherein said rotational force-transmitting means comprises gears provided on the respective axes of rotation of the pair of paper-supplying rollers and intermediate gears provided so as to be engaged with said gears provided on the axes of the pair of paper-supplying rollers.

6. A paper-supplying device as set forth in Claim 1, wherein the pair of assistant rollers consists of an upper assistant roller and a lower assistant roller having an elliptical section, respectively, so that long axes of the pair of assistant rollers may be shifted by 90° in turning angle,

7. A paper-supplying device as set forth in Claim 6, wherein the respective axes of rotation of said upper assistant roller and said lower assistant roller are supported by means of a supporting arm swingable up and down with a supporting axis as a fulcrum so as to be movable up and down, said supporting arm being connected with a solenoid swinging the supporting arm up and down at a rear end thereof, and the supporting arm being urged so that it may be positioned below by means of a spring to be turned upward against a force of said spring and push up the upper assistant roller and the lower assistant roller when the solenoid was driven and then move the upper assistant roller and the lower assistant roller downward when the solenoid was canceled from driving.
